# FASCICULE DE BREVET EUROPEEN

(11) **EP 2 800 856 B1**
(45) Date de publication et mention de la délivrance du brevet: **06.04.2016**
(21) Numéro de dépôt: 13701822.2
(22) Date de dépôt: 04.01.2013
(51) Int. Cl.: E06B 3/58, B60J 1/00, B60J 10/20, E06B 3/54

(54) **VITRAGE DOTE DE MOYENS PERIPHERIQUES D'ETANCHEITE ET SON PROCEDE DE FABRICATION**
GLASSCHEIBE MIT UMFANGSDICHTUNG UND IHR HERSTELLUNGSVERFAHREN
GLAZING UNIT EQUIPPED WITH PERIPHERAL SEALING MEANS AND ITS MANUFACTURING PROCESS

(30) Priorité: 06.01.2012 FR 1250165
(43) Date de publication de la demande: 12.11.2014
(73) Titulaire: Saint-Gobain Glass France, 92400 Courbevoie (FR)
(72) Inventeur: DUFFOUR, Adrien, F-45000 Orleans (FR)
(74) Mandataire: Teyssedre, Laurent
(86) Numéro de dépôt international: PCT/FR2013/050013
(87) Numéro de publication internationale: WO 2013/102737

(56) Documents cités:
- GB-A- 2 168 741

## Description

L'invention concerne un vitrage pourvu d'un joint périphérique d'étanchéité, ainsi que son procédé de fabrication.

Plus particulièrement, le vitrage de l'invention présente une épaisseur conséquente imposée par l'application visée pour celui-ci, notamment une épaisseur entre 30 et 200 mm.

Les applications sont notamment, sans toutefois y être limitées, les vitrages pour véhicules de transport, les vitrages blindés, les vitrages pour véhicules militaires, ferroviaires, etc...

Ce type de vitrage décrit par example dans GB 2 168 741 A est généralement feuilleté, et comporte au moins deux substrats, voire davantage, de natures diverses telles qu'en verre, cristal, céramique, matière transparente organique, et des feuilles intercalaires en polyvinylbutyral (PVB) ou similaire, ainsi qu'un joint d'étanchéité périphérique empêchant la pénétration de toute humidité dans la structure feuilletée et évitant toute pénétration de l'humidité extérieure au véhicule accueillant le vitrage vers l'intérieur du véhicule..

Par ailleurs, le vitrage est destiné à être agencé dans un cadre qui constitue la structure d'accueil de l'application visée pour le vitrage. Le joint d'étanchéité a par conséquent également pour but d'assurer une étanchéité entre le cadre et le vitrage.

Actuellement, l'association du joint périphérique au vitrage est obtenue en agençant le vitrage dans un moule, et en injectant de la matière plastique d'étanchéité entre les parois du moule et le vitrage. Le joint est continu sur l'ensemble du périmètre du vitrage et s'étend sur l'épaisseur (la tranche) du vitrage, ses arêtes et les zones périphériques immédiates des arêtes, au niveau des faces externes du vitrage.

Ce mode de fabrication impose de concevoir un moule spécifique pour chaque taille de vitrage, en superficie et en épaisseur.

Bien entendu, de tels vitrages sont fabriqués en série, un même moule étant utilisé maintes fois.

Cependant, dès que les cotes des vitrages sont changées, de nouveaux moules doivent être conçus.

Or le nombre de moules à prévoir pour une série de vitrages et la conception de nouveaux moules lorsque nécessaire, représentent des coûts de fabrication non négligeables qu'il est souhaitable de diminuer.

En outre, le joint associé au substrat par ce procédé de fabrication est par conséquent collé, ce qui n'est pas sans poser des problèmes lorsqu'il s'agit de le remplacer au cours de la vie du vitrage car le matériau d'étanchéité est souvent amener à se détériorer dans le temps. Ainsi, la solidarisation par collage rend les opérations de dissociation complexes.

L'invention a donc pour but de proposer un vitrage dont les moyens d'étanchéité sont associés de manière simple en s'adaptant aisément à toute épaisseur du vitrage, et étant facilement dissociables, tout en n'affectant pas les qualités d'étanchéité recherchées.

L'invention vise également un procédé de fabrication simplifié, en particulier ne nécessitant pas de moule spécifique selon l'épaisseur et les dimensions du vitrage et procurant une association/dissociation rapide des moyens d'étanchéité.

Selon l'invention, le vitrage comporte un substrat présentant deux faces externes opposées et une tranche périphérique reliant les deux faces, ainsi que des moyens périphériques d'étanchéité rapportés en bordure du substrat contre sa tranche et ses deux faces externes, les moyens d'étanchéité comportant au moins deux joints d'étanchéité coopérant chacun respectivement avec l'une des deux faces externes du substrat, et est caractérisé en ce que chacun desdits deux joints d'étanchéité (3A, 3B) coopère en outre avec la tranche du substrat, les deux joints formant une zone de recouvrement de l'un sur l'autre au niveau de la tranche du vitrages.

On entend par « substrat » au sens de l'invention, un substrat pouvant comprendre plusieurs feuilles de verre ou autre matériau transparent tel que parmi ceux listés auparavant au regard de l'état de l'art, par exemple, assemblées, et des feuilles intercalaires d'un autre matériau que le verre, tel que de la matière thermoplastique du type polyvinylbutyral (PVB) ou similaire.

Le qualificatif « externe » s'entend dans la suite de la description comme respectivement, étant en regard de l'environnement extérieur à l'élément auquel il se rapporte.

Le qualificatif « interne » est relatif à une partie tournée vers l'intérieur de l'élément auquel il se rapporte.

L'utilisation de deux joints séparés et montés de manière à prendre en sandwich le substrat, permet de s'affranchir de l'épaisseur du vitrage.

Par conséquent, quelle que soit l'épaisseur du vitrage, voire même en cas d'évolution de l'épaisseur pour une application, et cela dans la plage d'épaisseur acceptable correspondant à l'écartement maximal des deux joints pour assurer la zone de recouvrement, l'invention permet de limiter les coûts et les délais de cette modification sans imposer d'outillages supplémentaires ou adapter les outillages existants.

On rappelle qu'il n'est pas rare que dans une application, l'épaisseur du vitrage doit être modifiée. Les raisons sont diverses, telles qu'une conception nouvelle du vitrage, une augmentation de ses résistances mécaniques, un ajout de fonction, etc...

Par ailleurs, cette conception en deux parties identiques des moyens d'étanchéité avec des montages séquentiels (on monte le premier joint puis on rapporte le second) engendre au final une diminution par rapport à l'art antérieur du temps d'association des moyens d'étanchéité, ainsi que du temps de remplacement ce qui facilite la maintenance.

Ainsi, le premier joint est appliqué contre l'une des faces du vitrage et selon un retour contre la tranche dudit vitrage, tandis que le second joint est agencé de manière opposée au premier joint en étant appliqué contre la seconde face opposée du vitrage et selon un retour qui est plaqué, d'une part sur ladite tranche du vitrage, et d'autre part par sa zone d'extrémité distale contre le retour du premier joint de façon à former ladite zone de recouvrement.

Selon une caractéristique, les joints sont amovibles, notamment montés sur le substrat en y étant clippés.

Avantageusement, les joints sont des pièces unitaires, présentant chacun un périmètre continu correspondant au périmètre du substrat.

Cette conception du joint permet de fabriquer les joints indépendamment de leur association au substrat, contrairement à l'art antérieur.

Chaque joint présente un profil doté d'une première aile linéaire, d'une seconde aile linéaire et d'une partie courbe reliant les deux ailes, les deux ailes formant entre elles un angle aigu à l'état de repos du joint. On entend par « état de repos », une position du joint dans laquelle il n'est pas ou pas encore complètement monté sur le substrat.

Chaque joint à l'état monté sur le substrat en est solidaire par une association élastique, et présente une première aile linaire plaquée contre l'une des faces externes du vitrage et une seconde aile linaire serrée contre la tranche du vitrage.

Selon une autre caractéristique, les portions de joints, en regard de la tranche du substrat, se recouvrent selon une longueur qui varie entre une valeur seuil donnée et la dimension totale de l'épaisseur du substrat. La valeur seuil est en particulier de 10 mm.

Avantageusement, chaque joint présente sur sa portion coopérant avec celle de l'autre joint, des surépaisseurs ou nervures continues. Ces nervures garantissent l'étanchéité entre les joints au niveau de la zone de recouvrement. Les nervures peuvent aussi contribuer à la tenue et à la rigidification de la partie de joint située sur la tranche du substrat. Les nervures peuvent aussi canaliser la colle évoquée ci-dessous.

De préférence, les joints sont collés entre eux au niveau de la zone de recouvrement. Le collage est réalisé selon un cordon de colle continu ou en des points espacés.

Selon encore une autre caractéristique, les joints présentent des lèvres qui sont appliquées contre les faces externes du substrat, et de préférence d'autres lèvres agencés dans un plan opposé et qui sont destinées à coopérer avec la surface interne d'une structure d'accueil du vitrage, du type cadre.

Généralement, chaque joint présente une épaisseur maximale, distance du sommet d'une lèvre au sommet de la lèvre opposé, de l'ordre de 5 mm.

Selon une autre caractéristique, chaque joint est réalisé dans un matériau flexible et adapté à l'extrusion et le moulage, telle qu'une matière plastique polymère ou du type caoutchouc. Des exemples de matière sans être limitatif sont du silicone ou de l'Éthylène Propylène Diène Monomère (EPDM).

De préférence, la matière possède une dureté comprise entre 50 et 65 Shore A.

L'élasticité du matériau permet ainsi de déployer l'espace de logement agencé entre les ailes du joint et rendre aisé le montage dudit joint après la bordure du substrat, pour que celui-ci soit ensuite serré et comprimé contre le substrat assurant son ferme maintien.

La dureté du joint et la tension appliquée par celui-ci sur le substrat peuvent être différentes sur le périmètre du substrat, en particulier par segment ou côté du substrat, afin de s'adapter notamment à la taille dudit substrat. Ainsi, pour éviter le phénomène de « bâillement » en partie médiane d'un côté tandis que le joint serait maintenu tendu au niveau et à proximité des angles, sa dureté sera appropriée pour garantir la tension idoine sur la totalité du côté, y compris en sa partie médiane, afin d'assurer son ferme maintien. Par conséquent, on peut associer des parties linéaires extrudées de différentes dureté procurant des tension distinctes adaptées.

Le procédé de fabrication du vitrage de l'invention consiste en ce que les joints d'étanchéité sont fabriqués de manière séparée puis rapportés contre le substrat.

La fabrication d'un joint d'étanchéité comporte une étape d'extrusion de parties linéaires et au moins une étape consistant à fabriquer des parties d'angle et à les solidariser aux parties linéaires par moulage, notamment par injection. De préférence, on utilisera plusieurs moules pour former en une seule fois les angles du vitrage et fournir l'ensemble du joint continu.

L'invention permet donc de s'adapter à n'importe quelle géométrie de vitrage et épaisseur.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective et éclatée d'un vitrage de l'invention ;
- La figure 2 est une vue partielle schématique en perspective et de détail du vitrage ;
- La figure 3 illustre une vue partielle en coupe et de côté du vitrage intégré à un cadre d'accueil ;
- Le figure 4 est une vue en coupe et de côté d'un exemple de réalisation du joint selon l'invention à l'état de repos, sans être monté sur le vitrage ;
- Les figures 5a à 5c illustrent des vues en coupe de trois variantes respectives de profil du joint ;
- Les figures 6a à 6c illustrent des variantes de la figure 3 selon d'autres épaisseurs de vitrage ;
- La figure 7 est une vue de dessus partielle du joint une fois fabriqué ;
- La figure 8 est vue de dessus du joint lors d'une étape de fabrication ;
- Les figures 9a et 9b sont des vues schématiques partielles de dessus de deux variantes de vitrage avec le même joint.

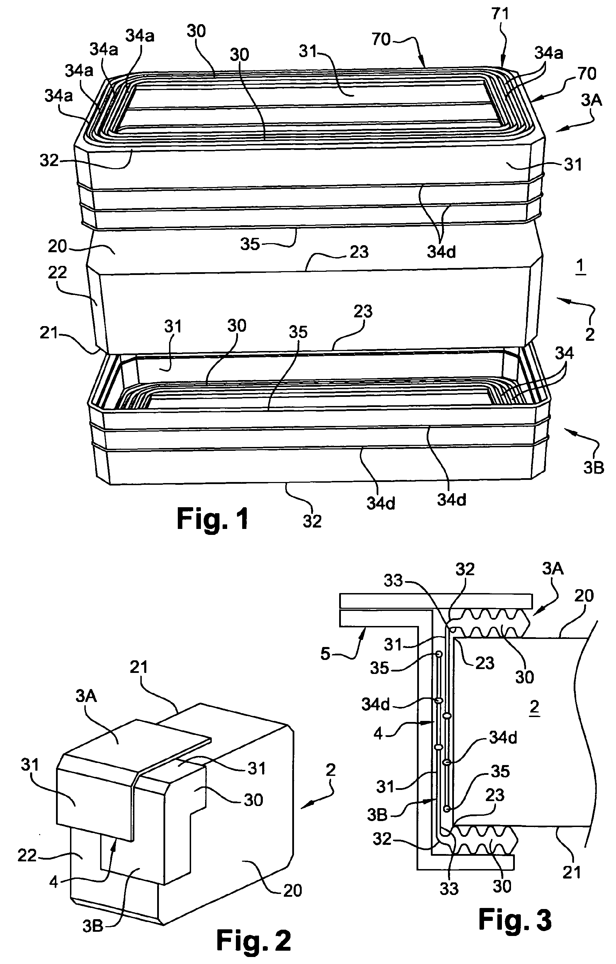

Le vitrage 1 de l'invention, illustré sur la vue éclatée de la figure 1, comporte un substrat 2 et au moins deux moyens périphériques d'étanchéité 3A et 3B.

Le vitrage est destiné à des applications nécessitant des substrats épais et/ou complexes incorporant plusieurs feuilles de verre ou autre matériau transparent tel ceux listés auparavant au regard de l'état de l'art, par exemple, et feuilles intercalaires en matière plastique. Les utilisations sont par exemple pour des vitrages blindés, des vitrages de véhicules militaires, ferroviaires, des vitrages aéronautiques.

L'épaisseur des vitrages de l'invention est notamment comprise entre 30 et 200 mm.

Le substrat 2 présente deux faces générales externes opposées 20 et 21, et une tranche périphérique 22 reliant les deux faces.

Selon l'invention, tel qu'illustré sur la figure 2, les moyens d'étanchéité 3A et 3B sont associés en bordure du vitrage, respectivement contre chacune des faces externes opposées 20 et 21 du substrat et contre la tranche 22.

Chacun des moyens d'étanchéité 3A, respectivement 3B, (figure 1) s'étend sur l'ensemble de la périphérie du substrat, et d'une part recouvre partiellement une des faces externes 20, respectivement 21, du substrat, et d'autre part s'étend sur tout ou partie de la tanche 22, les portions ou ailes des moyens d'étanchéité agencées en regard de la tranche 22 se superposant selon une zone de recouvrement 4 (figure 2).

Chaque moyen d'étanchéité 3A, 3B forme un joint continu tout autour du périmètre du vitrage. La garantie d'étanchéité au niveau de la tranche 22 du vitrage est assurée par le recouvrement des moyens d'étanchéité. La fabrication du joint sera décrite ultérieurement.

Tel que visible sur les figures 1 à 3, et en regard plus particulièrement de la figure 3, le joint continu présente une première aile 30 plaquée contre une face externe 20 ou 21 du substrat 2 et une seconde aile 31 appliquée contre la tranche 22 du substrat, les ailes formant au niveau de l'arête 23 de connexion de la face générale du substrat à la tranche, une liaison courbe 32 recouvrant ladite arête.

En position montée du joint, les ailes 30 et 31 forment entre elles un angle 33 correspondant à l'angle que fait chaque face du substrat avec sa tranche, généralement et ici perpendiculaire.

Le joint est formé d'un matériau d'étanchéité élastique de sorte à pouvoir se tendre pour chausser le bord du vitrage et être relâché pour épouser le profil du bord du vitrage en étant maintenu par pression sur ce dit bord sans mise en oeuvre et/ou moyens de solidarisation complémentaires.

Le joint continu constitue une pièce d'encadrement en tant que telle, fabriquée de manière indépendante et rapportée de façon amovible sur le substrat.

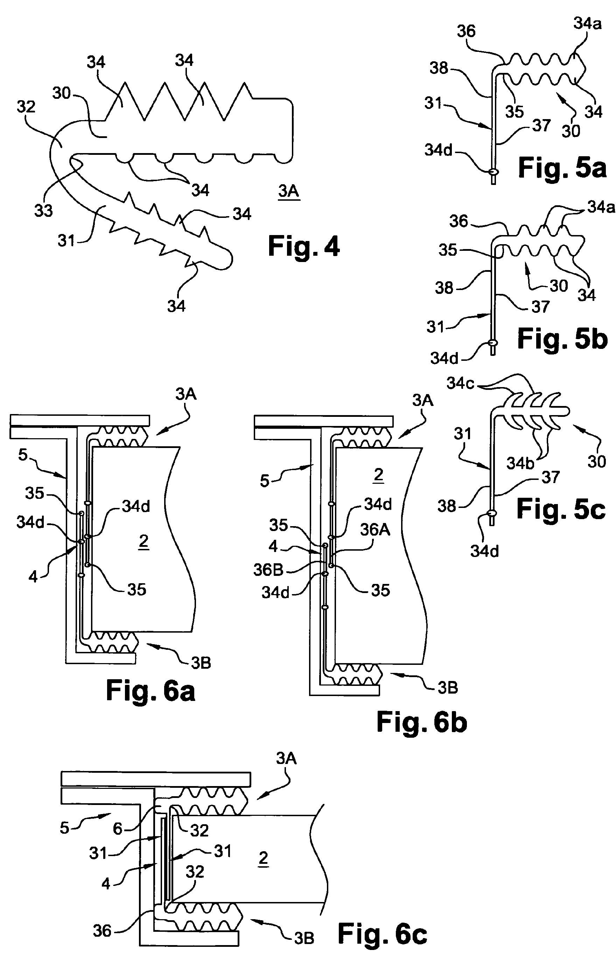

A l'état libre, tel qu'illustré sur la figure 4, c'est-à-dire lorsque le joint 3A ou 3B est dans son état détendu, les ailes 30 et 31 forment entre elles un angle 33 qui est aigu, ce qui impose au joint une force de rappel lorsqu'il est à l'état tendu et associé au substrat, garantissant son ferme maintien sur le bord du substrat.

Le matériau du joint répond aux propriétés suivantes, à savoir être :
- Etanche à l'eau,
- Apte à être extrudé et être injecté,
- Suffisamment dur pour maîtriser l'extrusion,
- Suffisamment souple, flexible pour être déformé de manière élastique.

De préférence, le matériau fait partie de la famille des caoutchoucs ou polymères, et présente une dureté comprise entre 50 et 60 Shore A. Il est par exemple en silicone.

Chaque aile 30, 31 peut présenter un profil distinct.

En effet, le substrat doté du joint est destiné à être intégré dans un cadre 5 (figure 3) qui constitue la structure d'accueil du vitrage liée à l'utilisation. En particulier, l'aile 30, qui est appliquée contre la face générale du substrat et est serrée contre ledit cadre, possède un profil adapté à l'utilisation envisagée du vitrage, de manière à fournir un compromis entre l'étanchéité à procurer et le maintien mécanique du substrat dans le cadre.

La figure 4 montre que les ailes 30 et 31 possèdent des lèvres 34 aux formes différentes.

Les figures 5a à 5c illustrent plusieurs variantes de profil pour l'aile 30 selon les applications visées. L'aile 30 pour chacune des trois variantes comprend des lèvres dont la forme et la disposition varient d'une variante à l'autre.

En regard de la figure 5a, des lèvres 34 et 34a de l'aile 30 sont agencées respectivement sur les faces opposées 35 et 36 du joint destinées à être plaquées contre le substrat et respectivement le cadre. Ces lèvres, telles qu'également visibles sur la figure 1, forment des bossages dont les sommets sont dans des plans parallèles aux faces 35 et 36 et sont parfaitement symétriques d'un plan à l'autre. Si ce profil permet de moins absorber les défauts de planéité du substrat, il garantit en revanche un excellent maintien du vitrage dans son cadre. Un tel profil est en particulier utilisé pour les vitrages blindés.

Sur la figure 5b, les lèvres 34 et 34a présentent le même profil bosselé qu'illustré sur la figure 5a. Toutefois, les sommets de part et d'autre des faces 35 et 36 du joint sont décalés, un sommet de l'un des côtés étant en regard d'un creux de l'autre côté. Ce profil engendre un bon maintien du vitrage dans son cadre et absorbe convenablement les défauts de planéité.

En regard de la figure 5c, les lèvres 34b et 34c forment des branches espacées de part et d'autre des faces 35 et 36, ces branches étant sensiblement courbes selon une inclinaison en direction opposée à la seconde aile 31. Ce profil privilégie l'absorption des défauts de planéités du substrat par rapport au maintien mécanique du vitrage dans son cadre.

La seconde aile 31, destinée à être appliquée contre la tranche 22 du vitrage, présente un profil plus simple sans lèvre en saillie prononcée. Elle présente (figures 1, 3 et 5a à 5c), sur chacune de ses faces opposées 37 et 38, une surface plane avec de préférence des nervures longitudinales 34d continues et espacées. Une nervure 35 est prévue en extrémité distale de l'aile 31.

En regard des figures 3 et 6a et 6b, le recouvrement des joints 3A et 3B est réalisé de sorte que les nervures 34d du joint 3A ne soient pas en regard des nervures 34d de l'autre joint 3B. Les nervures 34d et 35 fournissent l'étanchéité d'un joint par rapport à l'autre.

Ces nervures trouvent une autre utilité quand un collage optionnel est prévu au niveau de la zone de recouvrement 4 des joints 3A et 3B. Elles délimitent des canaux dans lesquels la colle est répartie.

Enfin, dans une variante supplémentaire de joint illustrée sur la figure 6c, des moyens de repérage 6 pour le positionnement dans le cadre 5 du substrat 2 doté de ses joints 3A et 3B, sont avantageusement associés aux joints. Ces moyens de repérage consistent en une surépaisseur locale des joints, disposée sur la face externe des joints et au niveau de la liaison 32 entre les deux ailes d'un même joint.

Selon l'invention, la zone de recouvrement 4 des joints garantit une parfaite étanchéité. La longueur de l'aile 31, au niveau de laquelle s'effectue le recouvrement, est suffisante pour assurer un recouvrement quelle que soit l'épaisseur de substrat (figures 6a à 6c).

Le recouvrement pour les grandes épaisseurs (figure 6b) est minimisé jusqu'à ce que la zone d'extrémité distale 36A du joint 3A, à proximité de la nervure d'extrémité 35, soit en regard de la zone d'extrémité distale 36B du joint 3B, à proximité de la nervure d'extrémité 35 correspondante.

Lorsque l'épaisseur du vitrage est inférieure à la longueur de la seconde aile 31 d'un joint, l'aile 31 de chaque joint 3A, 3B est alors découpée (figure 6c) sur le périmètre du joint pour réduire sa dimension au plus à celle de l'épaisseur du substrat, tout en gardant une longueur permettant le recouvrement 4.

Le procédé de fabrication du vitrage est à présent décrit.

L'intérêt du procédé de l'invention est de pouvoir fabriquer les moyens d'étanchéité de manière indépendante à leur association au substrat.

Un fois le périmètre connu des substrats, les moyens d'étanchéité peuvent être fabriqués en grande série et livrés ultérieurement pour leur montage sur les substrats.

Le montage des moyens d'étanchéité est réalisé :
- en chaussant sur le substrat le premier joint 3A par l'un de ses côtés, l'aile 30 d'un côté du joint étant appliquée contre la face externe du substrat tandis que l'on tire sur la seconde aile 31 pour l'amener contre la tranche 22 du substrat, ce qui « encapsule » l'arête 23 du substrat selon un premier côté ;
- en tirant sur ladite seconde aile 31 du joint au fur et à mesure sur tout le périmètre du joint et en la plaquant contre la tranche du substrat, le bord du vitrage est au final totalement habillé, chaussé par le premier joint ;
- on procède de la même manière pour le second joint 3B, l'aile 31 du second joint venant alors recouvrir partiellement l'aile 31 du premier joint pour former la zone de recouvrement 4.

Lorsqu'il est souhaité, pour certaines applications, de coller les deux joints au niveau de la zone de recouvrement, alors, préalablement à la mise en place du second joint, on dispose de la colle dans les canaux externes de l'aile 31 du premier joint délimités par les nervures 34d et 35.

Le procédé de fabrication d'un joint est le suivant.

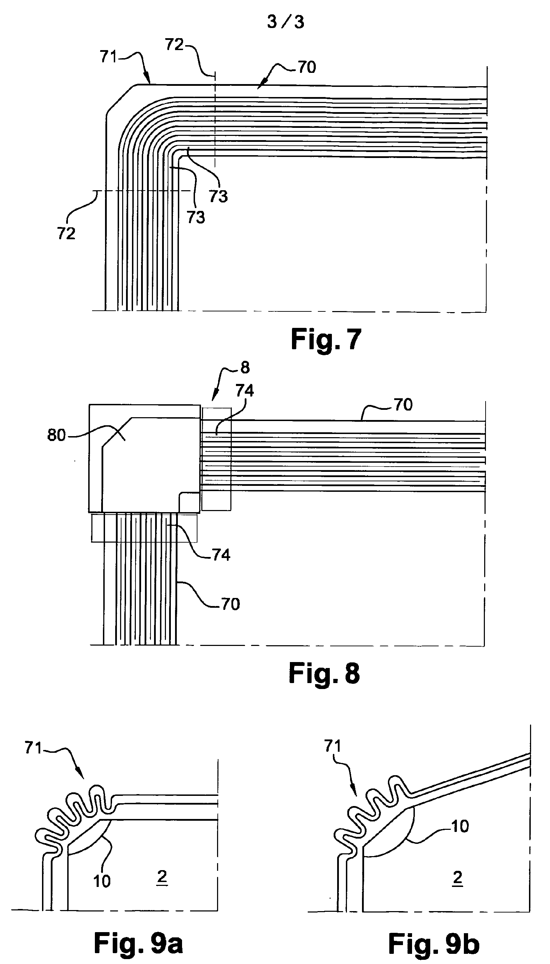

Tout d'abord, on notera en regard des figures 1 et 7 que le joint continu de l'invention est fait de parties linéaires 70 et de parties d'angle 71. Les parties linéaires sont rendues solidaires aux parties d'angles au niveau de lignes de soudure virtuelles 72 et schématisées en pointillés sur la figure 7. Au final, le joint est monobloc.

Les parties linéaires 70 sont extrudées. On procède à l'extrusion de la matière d'étanchéité selon le profil souhaité du joint et selon de grandes longueurs (plusieurs mètres), puis on découpe le produit extrudé pour fournir des parties linéaires dont les longueurs correspondent sensiblement aux côtés du substrat. Lesdites longueurs sont inférieures aux côtés du substrat pour tenir compte des parties d'angle 71 qui forment des retours 73 aboutés et solidarisés aux parties linéaires 70

En regard de la figure 8 qui illustre schématiquement en vue de dessus l'opération de solidarisation d'une partie d'angle 71 et de deux parties linéaires 70, on place les extrémités libres 74 des parties linéaires à l'intérieur d'un moule 8 qui présente l'empreinte 80 de la partie d'angle, puis on injecte la matière d'étanchéité dans le moule. Après démoulage, la partie d'angle est solidaire des parties linéaires.

Par ailleurs, on peut aisément changer la forme du joint d'angle si besoin pour s'adapter à la géométrie d'angle des substrats. Pour cela, seul un moule d'angle doit être conçu sans avoir à modifier la fabrication des parties linéaires.

Par exemple en regard des figures 9a et 9b, on peut réaliser des parties d'angle avec un profil en accordéon ce qui permet de maîtriser la déformation du matériau lors de son association au substrat afin d'autoriser avec le même joint un montage sur des substrats distincts dont l'angle 10 entre deux côtés est différent.

## Revendications

1. Vitrage (1) comportant un substrat (2) présentant deux faces externes opposées (20, 21) et une tranche périphérique (22) reliant les deux faces, ainsi que des moyens périphériques d'étanchéité rapportés en bordure du substrat contre sa tranche et ses deux faces externes, les moyens d'étanchéité comportant au moins deux joints d'étanchéité (3A, 3B) coopérant chacun respectivement avec l'une des deux faces externes (20, 21) du substrat, **caractérisé en ce que** chacun desdits deux joints d'étanchéité coopère en outre avec la tranche (22) du substrat, les deux joints formant une zone de recouvrement (4) de l'un sur l'autre au niveau de la tranche (22) du vitrage.

2. Vitrage selon la revendication 1, **caractérisé en ce que** les joints (3A, 3B) sont amovibles, notamment montés sur le substrat en y étant clippés.

3. Vitrage selon la revendication 1 ou 2, **caractérisé en ce que** les joints (3A, 3B) sont des pièces unitaires, présentant chacun un périmètre continu correspondant au périmètre du substrat.

4. Vitrage selon l'une quelconque des revendications précédentes, **caractérisé en ce que** chaque joint présente un profil doté d'une première aile (30) linéaire, d'une seconde aile (31) linéaire et d'une partie courbe (32) reliant les deux ailes, les deux ailes formant entre elles à l'état de repos du joint un angle aigu.

5. Vitrage selon l'une quelconque des revendications précédentes, **caractérisé en ce que** chaque joint à l'état monté sur le substrat en est solidaire par son association élastique, et présente une première aile (30) linaire plaquée contre l'une des faces externes du vitrage et une seconde aile (31) linaire serrée contre la tranche du vitrage.

6. Vitrage selon l'une quelconque des revendications précédentes, **caractérisé en ce que** les portions de joints, en regard de la tranche du substrat, se recouvrent selon une longueur qui varie entre une valeur seuil donnée et la dimension totale de l'épaisseur du substrat.

7. Vitrage selon l'une quelconque des revendications précédentes, **caractérisé en ce que** chaque joint présente sur sa portion coopérant avec celle de l'autre joint des surépaisseurs ou nervures continues (34c, 35).

8. Vitrage selon l'une quelconque des revendications précédentes, **caractérisé en ce que** les joints sont collés entre eux au niveau de la zone de recouvrement (4).

9. Vitrage selon l'une quelconque des revendications précédentes, **caractérisé en ce que** les joints présentent des lèvres (34) qui sont appliquées contre les faces externes du substrat, et de préférence d'autres lèvres (34a) agencés dans un plan opposé et qui sont destinées à coopérer avec la surface interne d'une structure d'accueil du vitrage du type cadre.

10. Vitrage selon l'une quelconque des revendications précédentes, **caractérisé en ce que** les joints sont faits d'un matériau flexible et apte à être extrudé et injecté, en particulier du type Éthylène Propylène Diène Monomère (EPDM) ou silicone.

11. Procédé de fabrication d'un vitrage selon l'une quelconque des revendications précédentes, **caractérisé en ce que** les joints d'étanchéité (3A, 3B) sont fabriqués de manière séparée puis rapportés contre le substrat.

12. Procédé de fabrication d'un vitrage selon la revendication précédente, **caractérisé en ce que** la fabrication d'un joint d'étanchéité comportent une étape d'extrusion de parties linéaires (70) et au moins une étape consistant à fabriquer des parties d'angle (71) et à les solidariser aux parties linéaires par moulage, notamment par injection.

## Patentansprüche

1. Verglasung (1), umfassend ein Substrat (2), das zwei gegenüberliegende Außenseiten (20, 21) und eine die beiden Seiten verbindende Umfangskante (22) aufweist, sowie Umfangsdichtungsmittel, die an der Umrandung des Substrats an seine Kante und seine beiden Außenseiten angesetzt sind, wobei die Dichtungsmittel wenigstens zwei Dichtungen (3A, 3B) umfassen, die jeweils mit einer der beiden Außenseiten (20, 21) des Substrats zusammenwirken, **dadurch gekennzeichnet, dass** eine jede der beiden Dichtungen ferner mit der Kante (22) des Substrats zusammenwirkt, wobei die beiden Dichtungen einen Bereich eines einander Überlappens (4) in Höhe der Kante (22) der Verglasung bilden.

2. Verglasung nach Anspruch 1, **dadurch gekennzeichnet, dass** die Dichtungen (3A, 3B) lösbar sind, insbesondere an dem Substrat unter Festclipsen hieran angebracht sind.

3. Verglasung nach Anspruch 1 oder 2, **dadurch gekennzeichnet, dass** die Dichtungen (3A, 3B) Einzelteile sind, die jeweils einen dem Umfang des Substrats entsprechenden durchgehenden Umfang aufweisen.

4. Verglasung nach einem der vorhergehenden Ansprüche, **dadurch gekennzeichnet, dass** jede Dichtung ein Profil aufweist, das mit einem ersten linearen Flügel (30), mit einem zweiten linearen Flügel (31) und mit einem die beiden Flügel verbindenden gekrümmten Teil (32) versehen ist, wobei die beiden Flügel im Ruhezustand der Dichtung einen spitzen Winkel zwischen sich bilden.

5. Verglasung nach einem der vorhergehenden Ansprüche, **dadurch gekennzeichnet, dass** jede Dichtung im an dem Substrat angebrachten Zustand durch ihre elastische Verbindung fest damit verbunden ist und einen ersten linearen Flügel (30), welcher gegen eine der Außenseiten der Verglasung gedrückt ist, und einen zweiten linearen Flügel (31), welcher gegen die Kante der Verglasung gepresst ist, aufweist.

6. Verglasung nach einem der vorhergehenden Ansprüche, **dadurch gekennzeichnet, dass** die Dichtungsabschnitte gegenüber der Kante des Substrats sich über einer Länge, die zwischen einem gegebenen Schwellwert und der Gesamtabmessung der Dicke des Substrats variiert, überlappen.

7. Verglasung nach einem der vorhergehenden Ansprüche, **dadurch gekennzeichnet, dass** jede Dichtung an ihrem Abschnitt, der mit demjenigen der anderen Dichtung zusammenwirkt, Überdicken oder durchgehende Rippen (34c, 35) aufweist.

8. Verglasung nach einem der vorhergehenden Ansprüche, **dadurch gekennzeichnet, dass** die Dichtungen in Höhe des Überlappungsbereichs (4) untereinander verklebt sind.

9. Verglasung nach einem der vorhergehenden Ansprüche, **dadurch gekennzeichnet, dass** die Dichtungen Lippen (34) aufweisen, die an die Außenseiten des Substrats angelegt sind, sowie vorzugsweise weitere Lippen (34a), die in einer gegenüberliegenden Ebene angeordnet sind und die dazu bestimmt sind, mit der Innenfläche einer Struktur zur Aufnahme der Verglasung vom Typ Rahmen zusammenzuwirken.

10. Verglasung nach einem der vorhergehenden Ansprüche, **dadurch gekennzeichnet, dass** die Dichtungen aus einem Material gefertigt sind, das flexibel und geeignet ist, stranggepresst und gespritzt zu werden, insbesondere vom Typ Ethylen-Propylen-Dien-Monomer (EPDM) oder Silikon.

11. Verfahren zur Herstellung einer Verglasung nach einem der vorhergehenden Ansprüche, **dadurch gekennzeichnet, dass** die Dichtungen (3A, 3B) getrennt hergestellt, dann an das Substrat angesetzt werden.

12. Verfahren zur Herstellung einer Verglasung nach dem vorhergehenden Anspruch, **dadurch gekennzeichnet, dass** die Herstellung einer Dichtung einen Schritt zum Strangpressen von linearen Teilen (70) und wenigstens einen Schritt, der darin besteht, Winkelteile (71) zu fertigen und diese mit den linearen Teilen durch Gießen, insbesondere durch Spritzen, fest zu verbinden, umfasst.

## Claims

1. Glazing unit (1) comprising a substrate (2) having two opposing external faces (20, 21) and a peripheral edge face (22) linking the two faces, as well as peripheral sealing means added at the border of the substrate against its edge face and its two external faces, the sealing means comprising at least two seals (3A, 3B) each cooperating respectively with one of the two external faces (20, 21) of the substrate, **characterized in that** each of said two seals further cooperates with the edge face (22) of the substrate, the two seals forming a zone of overlap (4) over one another on the edge face (22) of the glazing unit.

2. Glazing unit according to Claim 1, **characterized in that** the seals (3A, 3B) are removable, notably mounted on the substrate by being clipped thereto.

3. Glazing unit according to Claim 1 or 2, **characterized in that** the seals (3A, 3B) are unitary parts, each having a continuous perimeter corresponding to the perimeter of the substrate.

4. Glazing unit according to any one of the preceding claims, **characterized in that** each seal has a profile provided with a first linear wing (30), a second linear wing (31) and a curved part (32) linking the two wings, the two wings forming between them, in the rest state of the seal, an acute angle.

5. Glazing unit according to any one of the preceding claims, **characterized in that** each seal in the state mounted on the substrate is secured thereto by its elastic association, and has a first linear wing (30) pressed against one of the external faces of the glazing unit and a second linear wing (31) tight against the edge face of the glazing unit.

6. Glazing unit according to any one of the preceding claims, **characterized in that** the portions of seals, facing the edge face of the substrate, overlap by a length which varies between a given threshold value and the overall dimension of the thickness of the substrate.

7. Glazing unit according to any one of the preceding claims, **characterized in that** each seal has, on its portion cooperating with that of the other seal, continuous overthicknesses or ribs (34c, 35).

8. Glazing unit according to any one of the preceding claims, **characterized in that** the seals are glued together in the zone of overlap (4).

9. Glazing unit according to any one of the preceding claims, **characterized in that** the seals have lips (34) which are pressed against the external faces of the substrate, and preferably other lips (34a) arranged in an opposite plane and which are intended to cooperate with the internal surface of a structure accommodating the glazing unit of frame type.

10. Glazing unit according to any one of the preceding claims, **characterized in that** the seals are made of a flexible material and able to be extruded and injection molded, in particular of the ethylene propylene diene monomer (EPDM) or silicone type.

11. Method for manufacturing a glazing unit according to any one of the preceding claims, **characterized in that** the seals (3A, 3B) are manufactured separately then added against the substrate.

12. Method for manufacturing a glazing unit according to the preceding claim, **characterized in that** the manufacture of a seal comprises a step of extrusion of linear parts (70) and at least one step consisting in manufacturing corner parts (71) and in securing them to the linear parts by molding, notably by injection molding.
